# FASCICULE DE BREVET EUROPEEN

(11) **EP 1 358 636 B1**
(45) Date de publication et mention de la délivrance du brevet: **26.09.2007**
(21) Numéro de dépôt: 02701470.3
(22) Date de dépôt: 29.01.2002
(51) Int. Cl.: G07B 15/02

(54) **PROCEDE DE PAIEMENT D'UNE PLACE DE STATIONNEMENT**
VERFAHREN ZUM BEZAHLEN EINES PARKPLATZES
PARKING SPACE PAYMENT METHOD

(30) Priorité: 30.01.2001 FR 0101344
(43) Date de publication de la demande: 05.11.2003
(73) Titulaire: PARKEON, 75015 Paris (FR); Schlumberger Malco, Inc., Owings Mills, MD 21117 (US)
(72) Inventeur: HAUSEN, Axel, 64546 Mörfelden Walldorf (DE); MOUGIN, Thierry, 25410 Saint-Vit (FR)
(74) Mandataire: Domenego, Bertrand
(86) Numéro de dépôt international: PCT/IB2002/000292
(87) Numéro de publication internationale: WO 2002/061692

(56) Documents cités:
- WO-A-00/11616
- WO-A-97/19568
- WO-A-98/04080
- WO-A-98/49654
- WO-A-99/22346
- WO-A-99/48062
- FR-A- 2 791 161
- FR-A- 2 791 162
- US-A- 5 526 406

## Description

La présente invention concerne un procédé de paiement d'un bien ou service délivré par un appareil utilisant un téléphone mobile. La présente invention concerne plus particulièrement le paiement d'une place ou d'un droit de stationnement pour véhicule automobile au moyen de borne de paiement, tel qu'un horodateur, un parcmètre ou encore une caisse automatique, en utilisant un téléphone mobile.

On connaît, notamment de la demande internationale WO 96/11453, un système de gestion de stationnement payant construit autour d'un réseau de téléphonie mobile, dans lequel un usager appelle, au moyen de son téléphone mobile, un serveur de stationnement pour lui indiquer la zone de stationnement choisie, et fournir un identifiant du véhicule tel que le numéro d'immatriculation, et éventuellement un code personnel d'identification. Le serveur de stationnement enregistre les données de l'appel ainsi que l'heure de début de stationnement. Lorsque l'usager quitte le lieu de stationnement, il appelle à nouveau le serveur de stationnement pour l'informer de son départ. Compte tenu de la durée de stationnement et de la tarification en vigueur dans la zone de stationnement, le serveur peut calculer le prix à payer par l'usager et établir une facture à destination de l'usager soit directement, soit par l'intermédiaire de l'opérateur de téléphonie mobile, ou d'autres organismes comme des organismes bancaires.

Dans ce système connu le contrôle s'effectue par des agents de surveillance équipés d'appareils portables leur permettant de consulter le serveur de stationnement par liaison téléphonique afin de savoir si les véhicules en stationnement, identifiés notamment par leur numéro d'immatriculation, ont bien été régulièrement enregistrés auprès du serveur.

Bien qu'il offre un certain nombre d'avantages, le système de gestion de stationnement payant qui vient d'être décrit en relation avec l'état de la technique présente néanmoins certains inconvénients.

Pour l'usager du système, il est obligatoire de donner, et donc de payer, deux appels téléphoniques en direction du serveur, ce qui peut être très coûteux en comparaison du prix moyen de stationnement. Pour l'opérateur de stationnement, il est nécessaire de munir les agents de surveillance d'un équipement spécial dont le coût d'exploitation est important puisqu'il nécessite un appel téléphonique du serveur de stationnement. De plus, ce travail de surveillance est très long car il faut pour chaque véhicule taper son identifiant, numéro d'immatriculation ou numéro d'identification inscrit sur une étiquette placée de façon visible sur le véhicule.

D'autre part, ce système connu de gestion de stationnement payant ne permet pas à l'usager de visualiser par un reçu (ticket, etc.) son droit de stationnement en cours. Un tel système n'est de plus pas compatible avec les bornes existantes de paiement, comme les parcs d'horodateurs délivrant un ticket de stationnement à placer derrière le pare-brise du véhicule ou fournissant un listage des numéros de place ou des numéros d'immatriculation des véhicules en stationnement saisis aux horodateurs par les usagers. Il en résulte soit une perte d'information, soit la nécessité d'utiliser des logiciels plus complexes si l'on veut établir des états financiers ou des statistiques pour l'ensemble d'un système mixte avec délivrance d'un titre de stationnement depuis une borne de stationnement ou depuis un serveur.

Enfin, on peut constater que, si l'usager oublie de signaler son départ au serveur, le temps de stationnement continue d'être débité, ce qui se traduira inévitablement par des contestations de factures.

FR-A-2 791 161 décrit un procédé de paiement d'un service délivré par une borne, dans lequel un usager préalablement enregistré auprès d'un serveur appelle à l'aide d'un téléphone mobile ce serveur lequel identifie par cet appel l'usager et la borne puis adresse à la borne un message en vue de permettre à l'usager l'accès au service.

Ainsi, le problème technique à résoudre par la présente invention est d'améliorer un procédé de paiement utilisant à la fois un téléphone mobile et les bornes de paiement existantes (horodateur, parcmètre, caisse automatique, etc.) ces dernières étant alors reliées à un serveur. Ce procédé permet d'appliquer les moyens de la téléphonie mobile au domaine de stationnement payant sans toutefois présenter les inconvénients mentionnés plus hauts.

Le procédé selon l'invention vise le paiement d'un bien ou d'un service, tel qu'un droit de stationnement pour un véhicule automobile, délivré par un appareil automatique ou borne, tel qu'un horodateur.

Selon l'invention le procédé est défini par la revendication 1. Les revendications 2 à 14 définissent chacune un mode de réalisation particulier du procédé objet de l'invention.

La borne communique au serveur de stationnement les informations concernant le temps de stationnement soit juste en fin de transaction ou soit plus tard lors d'une collecte périodique des transactions financières réalisées sur cette borne.

Ainsi, selon le procédé objet de l'invention, la tarification du service, par exemple un droit de stationnement, est déterminée à partir du temps de stationnement demandé et de la localisation de la borne, mais également des paramètres personnels de l'usager préalablement définis lors de l'inscription de l'usager auprès de l'opérateur du serveur de stationnement (ou en cours d'abonnement), paramètres intégrant l'éventuelle souscription de formules d'abonnement, etc.

Ces paramètres personnels sont principalement de deux ordres : des paramètres de tarification et des paramètres de paiement. Les paramètres de tarification jouent un rôle sur le calcul du coût du stationnement en prenant en compte l'adresse de l'usager pour l'application d'un tarif résidentiel etc. Les paramètres de paiement ont trait eux aux capacités financières allouées à l'usager en montant et en durée, il peut s'agir à l'image des cartes bancaires ou de crédit de plafonner les dépenses de l'usager pour une période de temps donné, ou pour une transaction donnée, etc.

Par ailleurs, les paramètres personnels de l'usager peuvent permettre l'accès à d'autres services proposés par la borne, cette dernière pouvant être une borne interactive proposant l'accès à un certain nombre de services : guidage dans la ville, réservation d'hôtel, etc.

Ainsi, selon le procédé objet de l'invention, il est possible d'autoriser un paiement mixte combinant pour régler une même transaction, le paiement via un serveur distant de stationnement et son téléphone mobile avec d'autres moyens de paiement (pièces, billets ou encore cartes bancaires, etc.).

Ainsi, selon le procédé objet de l'invention, l'utilisation du téléphone mobile peut servir simplement à identifier l'usager et apporter des droits spécifiques pour la transaction en cours.

Ainsi, selon le procédé objet de l'invention, toutes les bornes peuvent être concernées, les horodateurs, les caisses automatiques, les parcmètres, ou tout autre équipement mettant en oeuvre des appareils automatique délivrant contre paiement des biens ou des services (appelées « vending machines » par les anglo-saxons).

La description qui va suivre en regard d'un dessin annexé, donné à titre d'exemple non limitatif, fera bien comprendre en quoi consiste l'invention et comment elle peut être réalisée.

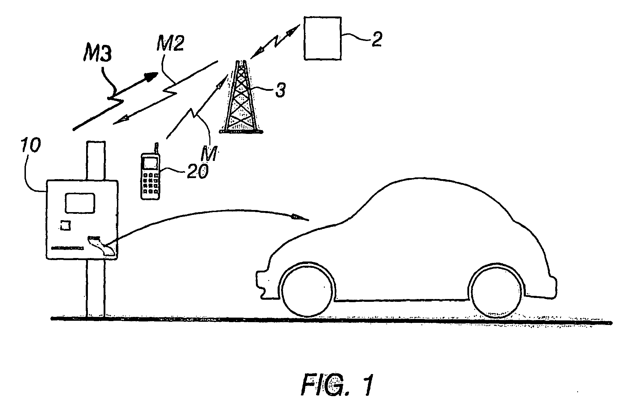

La figure 1 est un schéma d'un mode de mise en oeuvre du procédé conforme à l'invention.

Le schéma de la figure 1 illustre un procédé d'acquittement d'un droit de stationnement en voirie ou en parc ouvert d'un véhicule automobile.

Des bornes 10, encore appelée horodateurs, sont installées le long de la chaussée. Lorsqu'un automobiliste veut laisser son véhicule en stationnement, il se dirige vers la borne 10 la plus proche où il acquitte une certaine somme d'argent pour la durée de stationnement souhaitée et ce, soit au moyen de pièces de monnaies, soit à l'aide d'une carte de paiement adaptée, soit au moyen de billets bancaires, chèques ou jetons de valeur.

Ce droit de stationnement ayant été acquitté, l'automobiliste dispose alors d'un certain temps de stationnement autorisé. La borne délivre soit le droit de stationnement par exemple par un ticket portant différentes informations imprimées et notamment l'heure limite de stationnement autorisé. L'automobiliste doit placer ce ticket, preuve de l'acquittement de son droit de stationnement, derrière le pare-brise de son véhicule.

Le préposé à la surveillance du stationnement a donc simplement à comparer l'heure mentionnée sur le ticket à l'heure présente pour savoir si le véhicule est en stationnement régulier ou non et dans ce dernier cas dresser une contravention à l'encontre de l'automobiliste.

Ce type de système de gestion de stationnement présente pour l'usager l'avantage d'être très clair puisque l'heure limite de stationnement autorisé apparaît très distinctement sur le ticket qu'il a reçu, il présente également pour les municipalités qui les utilisent un investissement relativement faible et une grande facilité de contrôle. Ce ticket peut également servir de reçu de paiement pour l'usager

Conformément à l'invention, les horodateurs 10 sont également adaptés pour calculer le montant des droits de stationnement et accepter le paiement de ces derniers à partir d'un simple appel téléphonique lancé par un usager par l'intermédiaire de son téléphone mobile 20 communiquant à travers un réseau de radio télécommunication 3 du type GSM ou encore CDMA, TDMA, AMPS, D-AMPS, PCS, etc..

Pour ce faire, chaque horodateur 10 est relié à un serveur 2 encore appelé MPMS (acronyme anglo-saxon de « Mobile Payment Management System ») qui gère le paiement par téléphones des horodateurs 10. La liaison entre les horodateurs 10 et le MPMS 2 s'opère à travers un réseau de communication, qui peut être un réseau filaire de type commuté analogique PSTN (Public Switching Telephone Network) ou de type numérique ISDN (Integrated Services Digital Network). Ce réseau entre le MPMS 2 et les horodateurs 10 peut également être constitué par le réseau de radiotéléphonie mobile précité 3 ou encore par un second réseau de téléphonie mobile distinct du premier réseau et ce, quelle que soit sa nature : GSM, CDMA, TDMA, AMPS, D-AMPS, PCS ou encore par le réseau Internet ou plus généralement par tout réseau de communication apte à transmettre des données (X.25, Ethernet,..) ainsi que par toute combinaison de tels réseaux.

Les horodateurs 10 et le MPMS 2 sont donc munis de moyens appropriés de supervision et de réception/émission d'informations, ces moyens qui sont en eux-mêmes connus ne seront pas décrits plus en détail. Ces moyens de supervision et de réception/émission sont chargés d'organiser les échanges d'informations entre les horodateurs 10 et le MPMS 2.

L'usager souhaitant utiliser le service de tarification et de paiement des horodateurs via son téléphone mobile 20, doit tout d'abord s'enregistrer auprès de l'opérateur en charge de ce service. Cet opérateur peut être soit l'opérateur de téléphonie mobile de l'usager soit un opérateur indépendant soit encore le gestionnaire du parc d'horodateurs.

Lors de son inscription, l'usager fournit un certain nombre de données permettant son identification et en particulier son numéro de téléphone mobile 20 ainsi qu'éventuellement le numéro de la carte électronique SIM (Subscriber Identity Module) équipant son téléphone. Il peut également communiquer d'autres informations comme un numéro d'immatriculation de son véhicule ou encore celui d'une place de stationnement réservée.

L'usager fournit par ailleurs des informations personnelles tel que par exemple l'adresse de son domicile (pour le stationnement résidentiel), sa profession, etc., et choisi des formules qui vont déterminer des paramètres de tarification qui lui seront propres comme l'accès à un tarif de stationnement préférentiel (tarif de montant inférieur, tarif forfaitaire, tarif gratuit, tarif en mode dépôt/reprise de caution, ...).

L'usager détermine également des conditions financières d'accès au service. Ces paramètres de paiement ont trait aux capacités financières allouées à l'usager en montant et en durée, il peut s'agir à l'image des cartes bancaires ou de crédit de plafonner les dépenses de l'usager pour une période de temps donné, ou pour une transaction donnée, etc. L'usager détermine également le mode de paiement souhaité comme cela sera détaillé ci-après.

De même, l'usager peut être amené à choisir parmi différents services optionnels proposés par l'opérateur et pouvant donner lieu à tarification, tel que le rappel automatique de l'usager pour lui annoncer l'heure limite de stationnement, ou bien encore l'étendue territoriale du service : limité à une ville, un département, un pays, etc.

De même, l'usager peut être amené à choisir parmi différents services concernant le paiement des services qui lui seront facturés : rechargement de son compte, crédit autorisé, pré-paiement, etc.

De même, l'usager peut souscrire l'accès à d'autres services proposés par les horodateurs, ces derniers pouvant être des bornes interactives proposant l'accès à un certain nombre de services : guidage dans la ville, réservation d'hôtel, etc.

Bien évidemment toutes les fonctions standards des horodateurs 10 sont accessibles à l'usager via le serveur MPMS 2 et notamment le stationnement en temps réel. Cette fonction permet de modifier la durée du titre de stationnement après validation de la transaction initiale (arrêt ou prolongement). Le stationnement temps réel est une méthode pour que l'usager soit débité uniquement de sa durée réelle de stationnement : il ne paît que ce qu'il a 'consommé'.

Dans ce mode de fonctionnement le titre de stationnement est mémorisé dans l'horodateur avec un identifiant, qui est également imprimé sur le ticket ou affiché par un agent de surveillance.

Au retour de l'usager si la durée de stationnement pour lequel il a payé n'est pas écoulée, l'usager a alors la possibilité de se faire rembourser le temps restant non consommé.

Par exemple, le ticket formant titre de stationnement possède une partie détachable avec code secret. Au retour au véhicule, l'usager saisit ce code sur l'horodateur. L'équipement de stationnement peut alors rechercher le titre associé dans sa base de donnée et modifier la transaction (avec option d'impression d'un nouveau ticket formant reçu).

Le numéro de téléphone mobile de l'usager peut faire office de code secret, ce qui a l'avantage de simplifier l'interface usager (plus besoin d'imprimer ce code).

En variante, l'usager appelle une seconde fois le serveur MPMS. Le serveur MPMS envoie une deuxième autorisation. Cette nouvelle autorisation arrivant avant que le titre de stationnement en cours ne soit périmé, l'horodateur en déduit une demande de paiement temps réel et recalcule le montant à débiter.

De même et de façon similaire, l'usager a la possibilité en cas de dépassement du temps, de prolonger le droit de stationnement, après vérification que les paramètres de paiement (durée limite, montant maximum limite, ...) soient toujours valides.

Dans le cas de modification, respectivement arrêt ou prolongement, le titre en cours pourra être respectivement invalidé ou recréé avec les nouveaux droits (temps, montant) dans la base de données de l'horodateur.

Pour les actions de surveillance, un agent peut alors consulter la liste de titres de stationnement (en temps réel) valide/invalide soit par impression d'un ticket de contrôle, soit par transfert des données dans un équipement informatique pour visualiser et/ou exploiter ces informations de surveillance.

Selon le procédé de stationnement objet de la présente invention, l'usager s'étant inscrit auprès de l'opérateur de télépaiement des horodateurs et souhaitant mettre en oeuvre les services offerts tarification, paiement (pour tout ou partie), accès à des services spécifiques, etc., via son téléphone mobile 20, se présente devant l'horodateur 10 et compose simplement sur le clavier de son téléphone le numéro d'appel indiqué sur l'horodateur 10, il attend un signal de sonnerie et raccroche. Cette opération n'a duré quelques secondes.

En variante, il peut envoyer un message M de type SMS (Short Message System) sur son téléphone 20, ledit message pouvant se limiter au numéro précité.

L'appel ou le message lancé par l'usager est reçu par le MPMS 2 qui gère l'ensemble des numéros d'appel du parc d'horodateurs qu'il supervise.

Quelle que soit la technologie de communication utilisée sur le réseau 3, que se soit analogique avec un modem ou que se soit numérique à travers le protocole RNIS, le MPMS 2 reçoit du central, en même temps que le signal de sonnerie, le numéro du téléphone appelant. Grâce à des moyens appropriés, le MPMS 2 identifie immédiatement l'horodateur 10 concerné, chaque horodateur 10 ayant un numéro d'appel distinct, et le numéro du téléphone mobile appelant et ce, sans qu'aucune communication ne s'établisse entre le MPMS 2 et le téléphone mobile 20. Ces identifications ayant été opérées, le serveur déclenche la procédure d'activation de l'horodateur.

Le serveur 2 vérifie d'abord un certain nombre d'informations quant au téléphone appelant, telle que son éventuelle présence sur une liste noire des téléphones volés, et surtout si ce numéro est bien abonné. Le serveur vérifie également l'authenticité de l'appel.

Ces vérifications ayant été faites, le MPMS 2 établit alors une communication avec l'horodateur 10, par exemple sous la forme d'un message M2 approprié, fournissant les paramètres de tarification, de paiement ou d'accès aux services de l'horodateur 10 propres à l'usager.

L'horodateur 10 se met alors en état de recevoir la saisie par l'usager de la durée du stationnement demandé, par exemple en affichant un message de bienvenu, éventuellement personnalisé, sur l'écran de l'horodateur et en précisant les opérations à effectuer. En variante, l'usager initie lui-même la transaction en appuyant sur une touche 11 de l'horodateur correspondant à la fonction « Paiement par téléphone ».

En plus de la saisie par l'usager du temps de stationnement souhaité, il est possible de prévoir la saisie d'un code secret qui a été remis à l'usager lors de son inscription au service de télépaiement et qui lui permet de garantir que l'usager qui appelle le MPMS 2 et l'usager qui récupère le droit de stationnement auprès de l'horodateur 10 ne font qu'un. Le code secret est directement vérifié par l'horodateur 10 qui a reçu ce dernier à l'intérieur du message M2, ou bien encore par l'intermédiaire du MPMS 2 à travers une communication appropriée.

L'horodateur 10 affiche alors le tarif horaire du stationnement déterminé à partir des paramètres de tarification que lui a adressé le MPMS 2. L'usager saisi sur le clavier de l'horodateur, le temps de stationnement demandé et décide du mode de paiement, soit directement par des moyens de paiement appropriés : pièces, billets, cartes bancaires etc., soit via le serveur MPMS 2, soit encore en combinant ces deux modes de paiement. Lors que tout ou partie du droit de stationnement est effectué via le serveur MPMS 2, l'horodateur procède alors à la validation de ce paiement en tenant compte des paramètres de paiement de l'usager.

Le droit de stationnement ayant été acquitté d'une façon ou d'une autre, l'horodateur 10 imprime ensuite de façon parfaitement classique un ticket 11, faisant office de moyen de contrôle d'autorisation de stationnement. Le ticket 11 qui indique au moins l'heure de fin de stationnement est ensuite placé par l'usager à l'intérieur de son véhicule de manière visible afin de permettre un contrôle visuel par les agents de surveillance.

Sitôt la transaction effectuée, l'horodateur 10 peut établir alors une communication avec le MPMS 2, par exemple sous la forme d'un message M3 approprié indiquant le temps et/ou le montant du stationnement demandé par l'usager. Sinon, cette remontée d'informations sera faite de manière groupée (plusieurs transactions) selon une périodicité définie par l'opérateur du serveur de stationnement.

Selon le processus décrit ci-dessus, le serveur MPMS 2 fournit toutes les données permettant à l'horodateur de servir l'usager de manière « off line », c'est-à-dire uniquement en utilisant les ressources matérielles et logicielles contenues dans l'horodateur 10. Ce processus n'est pas limitatif de l'invention, laquelle peut également être mise en oeuvre « on line », c'est-à-dire par l'intermédiaire du serveur MPMS 2 en maintenant la communication entre l'horodateur 10 et le serveur MPMS 2 pendant toute la durée de la transaction, l'horodateur ne servant alors que d'une interface entre l'usager et le serveur MPMS 2. Dans ce cas c'est le MPMS 2 qui calcule le prix du stationnement à partir des informations concernant le lieu de stationnement, la durée de stationnement, les données personnelles de l'usager ou encore les formules d'abonnement souscrites, toutes informations qui contribuent à déterminer la tarification à appliquer (par exemple tarif résidentiel).

L'usager est débité de cette somme directement d'un compte auprès de l'opérateur du réseau 3 de téléphonie mobile ou du MPMS 2.

D'autres modes de paiement peuvent être envisagés tels que le débit d'un compte prépayé auprès de l'opérateur du MPMS 2 de stationnement. Pour recharger son compte, l'usager achète une carte prépayée grattable de 100F de droits de stationnement par exemple, appelle le serveur avec son téléphone mobile et tape le numéro inscrit sur la carte grattable, son compte prépayé est alors crédité de 100F. Lorsqu'il veut stationner, l'usager appelle le serveur de stationnement, son compte est alors reconnu par la carte SIM et le solde s'affiche à l'écran de manière à informer l'usager du montant des droits de stationnement dont il dispose.

On peut également utiliser un téléphone mobile 20 à double fente permettant la présence d'une carte SIM et d'un lecteur de cartes destiné à recevoir une carte porte-monnaie électronique ou bancaire afin d'effectuer des transactions par l'intermédiaire du téléphone mobile 20. Dans ce contexte, pour payer le prix de stationnement, l'usager introduit sa carte porte-monnaie électronique ou bancaire dans le lecteur de son téléphone mobile et effectue le règlement en liaison sécurisée avec le MPMS 2 qui enregistre la transaction, débite la carte et fera la compensation avec les organismes bancaires.

Bien évidement la présente invention ne se limite pas aux seuls horodateurs mais s'applique également aux caisses automatiques, aux parcmètres, ou à tout autre équipement/ système contrôlant le stationnement (ouverture d'une barrière/porte d'un système de contrôle d'accès) mais également et plus généralement tout appareil automatique délivrant contre paiement des biens ou des services (appelés « vending machines » par les anglo-saxons).

## Revendications

1. Procédé de paiement d'un service, tel qu'un droit de stationnement pour un véhicule automobile, délivré par une borne (10), tel qu'un horodateur, le procédé comprenant les étapes dans lesquelles, un usager s'étant préalablement enregistré auprès d'un serveur (2) ;
- l'usager, muni d'un téléphone mobile (20), appelle ledit serveur (2) via ledit téléphone mobile ;
- ledit serveur (2) identifie d'une part, l'usager sur la base du numéro de téléphone appelant, et d'autre part, la borne (10), puis adresse à ladite borne (10) un message (M2) ;
**caractérisé en ce que**
- l'usager appelle ledit serveur (2) en utilisant un numéro d'appel distinct spécifique à ladite borne ;
- ledit serveur (2) identifie ladite borne sur la base dudit numéro d'appel ;
- le message est un message d'autorisation d'accès comprenant des paramètres propres à l'usager ;
- à la réception dudit message, ladite borne (10) autorise l'usager à accéder à ses services à des conditions prédéterminées fonction desdits paramètres, afin que l'usager sélectionne un service à l'aide de ladite borne ; et
- un paiement est acquitté pour le service sélectionné.

2. Procédé de paiement d'un service selon la revendication 1, **caractérisé en ce que** ledit message (M2) d'autorisation d'accès comporte des paramètres de tarification spécifiques audit usager et déterminés lors de l'inscription dudit usager audit serveur (2), et **en ce que** ladite borne (10) détermine le coût des services délivrés à l'usager en tenant compte desdits paramètres tarification.

3. Procédé de paiement d'une place de stationnement selon la revendication 1, **caractérisé en ce que** ledit message d'autorisation comporte des paramètres de paiement spécifiques audit usager et déterminés lors de l'inscription dudit usager audit serveur (2), et **en ce que** ladite borne (10) délivre des services audit usager dans la limite desdits paramètres de paiement.

4. Procédé de paiement d'un service selon l'une quelconque des revendications 1 à 3, **caractérisé en ce que** l'usager paie tout ou partie des services directement à la borne par des moyens de paiement appropriés.

5. Procédé de paiement d'un service selon l'une quelconque des revendications 1 à 4, **caractérisé en ce que** tout ou partie des services utilisés par l'usager sont facturés audit usager par ledit serveur (2), ledit serveur (2) ayant reçu de ladite borne (10) un rapport de transaction précisant les services utilisés par ledit usager.

6. Procédé de paiement d'un service selon l'une quelconque des revendications précédentes, **caractérisé en ce que** ledit numéro d'appel spécifique est affiché sur ladite borne (10).

7. Procédé de paiement d'un service selon l'une quelconque des revendications précédentes, **caractérisé en ce que** ledit serveur (2) comporte des moyens d'identification du numéro de téléphone appelant sans décrocher la ligne.

8. Procédé de paiement d'un service selon la revendication 7, **caractérisé en ce que** l'usager interrompt l'appel au serveur (2) dès que s'établit un signal indiquant la connexion audit serveur tel qu'un signal de sonnerie.

9. Procédé de paiement d'un service selon l'une quelconque des revendications 1 à 8, **caractérisé en ce que** pour accéder aux services de ladite borne (10), l'usager doit s'identifier en saisissant un mot de passe personnel.

10. Procédé de paiement d'un service selon l'une quelconque des revendications 1 à 9, **caractérisé en ce que** le montant des services est débité d'un compte auprès du serveur (2) ou d'un opérateur bancaire ou encore d'un opérateur de réseau de télécommunication (3).

11. Procédé de paiement d'un service selon l'une quelconque des revendications 1 à 10, **caractérisé en ce que** le montant des services est débité d'un compte prépayé.

12. Procédé de paiement d'un service selon la revendication 11, **caractérisé en ce que** ledit compte prépayé est rechargeable au moyen d'une carte prépayée grattable.

13. Procédé de paiement d'un service selon l'une quelconque des revendications 1 à 10, **caractérisé en ce que** le montant des services est débité d'une carte porte-monnaie électronique ou bancaire introduite dans ledit téléphone mobile (20).

14. Procédé de paiement d'un droit de stationnement pour un véhicule automobile selon l'une quelconque des revendications précédentes, dans lequel ladite borne est un horodateur. (10) relié au serveur (2) de stationnement, **caractérisé en ce qu'**il comprend en outre les étapes successives suivantes :
- ledit serveur (2) transmet un message d'autorisation à l'horodateur (10) pour que ledit usager puisse saisir un temps de stationnement ;
- ledit horodateur délivre audit usager un ticket de stationnement (11);
- ledit horodateur (10) communique audit serveur (2) des informations concernant le temps de stationnement demandé par l'usager ;
- ledit serveur (2) facture audit usager le temps de stationnement.

## Claims

1. A process of payment for a service, such as a parking fee for a motor vehicle, issued by a paystation (10), such as a ticket machine, the process comprising the stages in which, a user having been previously registered with a server (2),
- the user, equipped with a mobile phone (20), calls the said server (2) via the mobile telephone,
- the said server (2) identifies both the user on the basis of the caller's telephone number and also the paystation (10), and then sends a message (M2) to the said paystation (10),
**characterised in that**
- the user calls the said server (2) using a separate call number which is specific to that paystation,
- the said server (2) identifies the said paystation on the basis of the said call number,
- the message is an access authorisation message comprising user-specific parameters,
- on receipt of the said message the said paystation (10) authorises the user to access its services under predetermined conditions depending upon the said parameters so that the user can select a service using the said paystation, and
- payment for the selected service is acknowledged.

2. A process of payment for a service according to claim 1, **characterised in that** the said access authorisation message (M2) comprises tariff parameters which are specific to the said user and determined on the basis of the said user's subscription to the said server (2), and **in that** the said paystation (10) determines the cost of the services provided to the user having regard to the said tariff parameters.

3. A process of payment for a parking space according to claim 1, **characterised in that** the said authorisation message comprises payment parameters specific to the said user determined when the said user subscribes to the said server (2) and **in that** the said paystation (10) delivers services to the said user within the limits of the said payment parameters.

4. A process of payment for a service according to any one of claims 1 to 3, **characterised in that** the user pays for all or part of the services directly at the paystation through appropriate payment means.

5. A process of payment for a service according to any one of claims 1 to 4, **characterised in that** all or part of the services used by the user are invoiced to the said user by the said server (2), the said server (2) having received a transaction report specifying the services used by the said user from the said paystation (10).

6. A process of payment for a service according to any one of the preceding claims, **characterised in that** the said specific call number is displayed on the said paystation (10).

7. A process of payment for a service according to any one of the preceding claims, **characterised in that** the said server (2) comprises means for identifying the caller's telephone number without hanging up the line.

8. A process of payment for a service according to claim 7, **characterised in that** the user interrupts the call to the server (2) as soon as a signal indicating connection to the said server, such as an audible signal, is produced.

9. A process of payment for a service according to any one of claims 1 to 8, **characterised in that** in order to gain access to the services of the said paystation (10) the user must identify himself by entering a personal password.

10. A process of payment for a service according to any one of claims 1 to 9, **characterised in that** the amount in respect of the services is debited from an account with the server (2) or a banking operator or again a telecommunications system operator (3).

11. A process of payment for a service according to any one of claims 1 to 10, **characterised in that** the amount in respect of the services is debited from a prepaid account.

12. A process of payment for a service according to claim 11, **characterised in that** the said prepaid account can be topped up using a prepaid scratch card.

13. A process of payment for a service according to any one of claims 1 to 10, **characterised in that** the amount in respect of the service is debited from an electronic cash or bank card inserted into the said mobile telephone (20).

14. A process of payment for parking fees by a motor vehicle according to any one of the preceding claims, in which the said paystation is a ticket machine (10) connected to the parking server (2), **characterised in that** it further comprises the following successive stages:
- the said server (2) transmits an authorisation message to the ticket machine (10) so that the user can enter the parking time,
- the said ticket machine delivers the said user a parking ticket (11),
- the said ticket machine (10) communicates information relating to the parking time requested by the user to the said server (2),
- the said server (2) invoices the said user for the parking time.

## Patentansprüche

1. Verfahren für die Bezahlung einer Leistung, wie zum Beispiel einer Parkgebühr für ein Kraftfahrzeug, ausgegeben von einer Säule (10), wie zum Beispiel einem Parkscheinautomaten, wobei das Verfahren die folgenden Schritte aufweist, wobei sich ein Benutzer vorher bei einem Server (2) registriert hat, wobei
- der mit einem Mobiltelefon (20) ausgestattete Benutzer über das Mobiltelefon den Server (2) anruft,
- der Server (2) einerseits den Benutzer auf Basis der anrufenden Telefonnummer und andererseits die Säule (10) identifiziert, und anschließend an die Säule (10) eine Nachricht (M2) sendet,
**dadurch gekennzeichnet, dass**
- der Benutzer den Server (2) unter Verwendung einer sich unterscheidenden für die Säule spezifischen Rufnummer anruft,
- der Server (2) die Säule auf Basis der Rufnummer identifiziert,
- die Nachricht eine ZugriffsautorisierungsNachricht ist, die dem Benutzer zugehörige Parameter aufweist,
- beim Empfang der Nachricht die Säule (10) den Benutzer autorisiert, auf ihre Leistungen zuzugreifen, zu vorbestimmten, den Parametern entsprechenden Bedingungen, damit der Benutzer eine Leistung mit Hilfe der Säule auswählen kann, und
- eine Zahlung für die gewählte Leistung entrichtet wird.

2. Verfahren für die Bezahlung einer Leistung gemäß Anspruch 1, **dadurch gekennzeichnet, dass** die Zugriffsautorisierungsnachricht (M2) für den Benutzer spezifische und bei der Anmeldung des Benutzers bei dem Server (2) bestimmte Gebührenparameter aufweist, und **dadurch**, dass die Säule (10) die Kosten für die dem Benutzer bereitgestellten Leistungen bestimmt, indem die Gebührenparameter berücksichtigt werden.

3. Verfahren für die Bezahlung eines Parkplatzes gemäß Anspruch 1, **dadurch gekennzeichnet, dass** die Autorisierungsnachricht für den Benutzer spezifische und bei der Anmeldung des Benutzers bei dem Server (2) festgesetzte Zahlungsparameter aufweist, und **dadurch**, dass die Säule (10) dem Benutzer innerhalb der Grenze der Zahlungsparameter Leistungen bereitstellt.

4. Verfahren für die Bezahlung einer Leistung gemäß einem der Ansprüche 1 bis 3, **dadurch gekennzeichnet, dass** der Benutzer mit geeigneten Zahlungsmitteln alle oder einen Teil der Leistungen direkt bei der Säule bezahlt.

5. Verfahren für die Bezahlung einer Leistung gemäß einem der Ansprüche 1 bis 4, **dadurch gekennzeichnet, dass** alle oder ein Teil der von dem Benutzer in Anspruch genommenen Leistungen dem Benutzer von dem Server (2) berechnet werden, wobei der Server (2) von der Säule (10) einen die von dem Benutzer in Anspruch genommenen Leistungen genau ausführenden Transaktionsbericht bekommen hat.

6. Verfahren für die Bezahlung einer Leistung gemäß einem der vorhergehenden Ansprüche, **dadurch gekennzeichnet, dass** die spezifische Rufnummer auf der Säule (10) angezeigt ist.

7. Verfahren für die Bezahlung einer Leistung gemäß einem der vorhergehenden Ansprüche, **dadurch gekennzeichnet, dass** der Server (2) Mittel zur Identifizierung der anrufenden Telefonnummer aufweist, ohne dabei die Leitung zu trennen.

8. verfahren für die Bezahlung einer Leistung gemäß Anspruch 7, **dadurch gekennzeichnet, dass** der Benutzer den Anruf an den Server (2) unterbricht, sobald sich ein Signal bildet, das die Verbindung mit dem Server anzeigt, so wie ein Klingelzeichen-Signal.

9. Verfahren für die Bezahlung einer Leistung gemäß einem der Ansprüche 1 bis 8, **dadurch gekennzeichnet, dass** der Benutzer, um Zugriff auf die Leistungen der Säule (10) zu bekommen, sich durch Erfassen eines persönlichen Passworts identifizieren muss.

10. Verfahren für die Bezahlung einer Leistung gemäß einem der Ansprüche 1 bis 9, **dadurch gekennzeichnet, dass** der Geldbetrag für die Leistungen von einem Konto bei dem Server (2) oder bei einer Bankgesellschaft oder auch bei einem Telekommunikationsnetzbetreiber (3) abgebucht wird.

11. Verfahren für die Bezahlung einer Leistung gemäß einem der Ansprüche 1 bis 10, **dadurch gekennzeichnet, dass** der Geldbetrag für die Leistungen von einem vorausbezahlten Konto abgebucht wird.

12. Verfahren für die Bezahlung einer Leistung gemäß Anspruch 11, **dadurch gekennzeichnet, dass** das vorausbezahlte Konto mittels einer Vorauszahlungs-Rubbelkarte aufgeladen werden kann.

13. Verfahren für die Bezahlung einer Leistung gemäß einem der Ansprüche 1 bis 10, **dadurch gekennzeichnet, dass** der Geldbetrag für die Leistungen von einer in das Mobiltelefon (20) eingesteckten elektronischen Geldbörsen-Karte oder Bankkarte abgebucht wird.

14. Verfahren für die Bezahlung einer Parkgebühr für ein Kraftfahrzeug gemäß einem der vorhergehenden Ansprüche, wobei die Säule ein Parkscheinautomat (10) ist, der mit dem Park-Server (2) gekoppelt ist, **dadurch gekennzeichnet, dass** es ferner die folgenden aufeinander folgenden Schritte aufweist:
- der Server (2) überträgt eine Autorisierungsnachricht an den Parkscheinautomaten (10), damit der Benutzer eine Parkzeit erfassen kann,
- der Parkscheinautomat gibt an den Benutzer einen Parkschein (11) aus,
- der Parkscheinautomat (10) sendet an den Server (2) Informationen bezüglich der von dem Benutzer angeforderten Parkzeit,
- der Server (2) berechnet dem Benutzer die Parkzeit.
